# EUROPÄISCHE PATENTSCHRIFT

(11) **EP 1 532 208 B1**
(45) Veröffentlichungstag und Bekanntmachung des Hinweises auf die Patenterteilung: **15.02.2006**
(21) Anmeldenummer: 03766288.9
(22) Anmeldetag: 24.07.2003
(51) Int. Cl.: C08L 83/04, C08K 5/00, C08K 5/56, A23G 3/02

(54) **VERNETZENDE SILICONELASTOMERE, VERFAHREN ZU DEREN HERSTELLUNG SOWIE DIE VERWENDUNG DER VERNETZBAREN MASSEN**
CROSS-LINKING SILICONE ELASTOMERS, METHOD FOR THE PRODUCTION THEREOF, AND USE OF THE CROSS-LINKABLE MASSES
ELASTOMERES SILICONES RETICULANTS, PROCEDE DE PRODUCTION DE CES DERNIERS ET UTILISATION DES MELANGES RETICULABLES

(30) Priorität: 01.08.2002 DE 10235268
(43) Veröffentlichungstag der Anmeldung: 25.05.2005
(73) Patentinhaber: Wacker Chemie AG, 81737 München (DE)
(72) Erfinder: FEHN, Armin, 84561 Mehring (DE); WEIDINGER, Jürgen, 84489 Burghausen (DE); DÜRNBERGER, Adelheid, A-5230 Mattighofen (AT)
(74) Vertreter: Gössmann, Christoph Tassilo
(86) Internationale Anmeldenummer: PCT/EP2003/008175
(87) Internationale Veröffentlichungsnummer: WO 2004/013230

(56) Entgegenhaltungen:
- US-A- 3 296 291

## Beschreibung

Die Erfindung betrifft durch spezielle Rhodiumverbindungen vernetzende Siliconelastomere, Verfahren zu deren Herstellung sowie die Verwendung der vernetzbaren Massen.

Siliconelastomere werden üblicherweise durch Vernetzung mit Platin.oder Platinverbindungen erzeugt.

Nachteile der Silicone, die mit Platin oder Platinverbindungen vernetzt werden, sind die Gelb- und/oder Braunfärbung der vernetzten Silicone, die insbesondere bei großvolumigen Siliconteilen visuell sichtbar sind. Die Verfärbungen werden durch das Platin, das am Ende der Vernetzung als Platinkolloid: vorliegt, hervorgerufen, wie in der Literatur *J.Am.Chem.Soc.* 108 (1986) 7228ff beschrieben. Des weiteren ist bei vielen Platin vernetzten Siliconen die Transparenz herabgesetzt und die Siliconelastomere sind damit nicht durchsichtig, sondern trüb, was als durchscheinend bzw. transluzent, bezeichnet wird. Die Platinkatalysatoren haben den weiteren Nachteil, dass Siliconkautschuke, die sie enthalten, nach dem Vermischen der wesentlichen Bestandteile nur eine begrenzte Verarbeitungszeit aufweisen, weil nach dem Vermischen der einzelnen Komponenten die Platinvernetzung bereits bei Raumtemperatur einsetzt. Die Verarbeitungszeit der Massen lässt sich zwar durch Einarbeiten einer, die Wirksamkeit des Platinkatalysators hemmenden Substanz (diese werden allgemein als Inhibitoren bezeichnet) erhöhen, doch wird hierdurch dann wiederum die Härtungsgeschwindigkeit der Masse erniedrigt.

In wenigen Fällen sind auch Rhodiumkatalysatoren für die Vernetzung von Siliconelastomeren beschrieben. In der US 4, 262, 107 werden Siliconkautschukzusammensetzungen beschrieben, die Silanol-endblockierte Poyldiorganosiloxane, Siliconhydride und Rhodiumkatalysatoren enthalten. Bei diesem System findet allerdings keine Hydrosilylierungsreaktion statt, sondern eine Kondensationsreaktion von ≡Si-OH und ≡Si-H zu ≡Si-O-Si≡ unter Abspaltung von Wasserstoff. Zur Herstellung von Beschichtungen mag dieses System geeignet sein, zur Herstellung von Formteilen ist es aber, bedingt durch die Wasserstoffentwicklung, nicht geeignet. In der DE 24 29 772 werden Siliconmassen beschrieben, die aus einem vinylgruppenhaltigen Polyorganosiloxan, einem Polyorganosiloxan mit siliciumgebundenen Wasserstoffatomen und einem Rhodiumkatalysator bestehen. Als Rhodiumkatalysatoren werden Komplexe der Formel RhX₃(SR₂)₃ oder Rh₂(CO)₄X₂, verwendet, wobei X Halogen bedeutet und R jeweils für Alkyl, Aryl, Aralkyl oder Alkylaryl steht. Die resultierenden Siliconzusammensetzungen haben als Vorteile lange Verarbeitungszeiten nach dem Zusammenmischen aller essentiellen Bestandteile bei Raumtemperatur, auch ohne Inhibitoren, und gute Vernetzungscharakteristika bei erhöhten Temperaturen. Ein großer Nachteil bei Verwendung von RhX₃(SR₂)₃: welche in der DE 24 29 772 als bevorzugt beschrieben werden, sind die Thioether (SR₂), die als Liganden verwendet werden. Diese Thioether vernetzen nicht ein, sind stark geruchsbelästigend und ausgesprochen toxisch. Des weiteren führen diese. Thioether in einigen Fällen, bedingt durch die Schwefelgruppe, zu Gelbfärbungen der resultierenden Siliconelastomere. Auch Rh₂(CO)₄X₂ weist gravierende Nachteile auf. Am schwersten wiegt dabei sicherlich der, dass die Verbindung per se an feuchter Luft nicht stabil ist und sich allmählich zersetzt. *Inorg*. *Synth*. 8 (1966), 211 ff. Die Zersetzung des Rhodiumkomplexes in der Siliconzusammensetzung beginnt also bereits nach deren Herstellung. Wenn man nun bedenkt, dass es mehrere Monate dauern kann, bis die Siliconmasse beim Kunden verarbeitet wird, so wird klar, dass der Rhodiumkomplex zu dieser Zeit bereits zersetzt ist und in seiner ursprünglichen Form nicht mehr vorliegt, was dazu führt, dass dann die Siliconmasse entweder gar nicht mehr vernetzt oder eine völlig unerwartete und unerwünschte Vernetzungscharakteristik aufweist.

Es bestand daher die Aufgabe Siliconzusammensetzungen zur Verfügung zu stellen, die die Nachteile des Standes der Technik überwinden, insbesondere ohne Inhibitor lange Verarbeitungszeiten bei Raumtemperatur ermöglichen, bei erhöhten Temperaturen schnell aushärten und deren Vulkanisat eine extrem hohe Transparenz ohne Gelb- oder Braunfärbung aufweisen.

Wir haben nun überraschend gefunden, dass die Probleme gelöst werden können, wenn spezielle Rhodiumverbindungen verwendet werden.

Gegenstand der vorliegenden Erfindung sind daher Organopolysiloxanmassen, die durch zumindest eine Rhodiumverbindung härten, enthaltend
(A) Verbindungen, die Reste mit aliphatischen Kohlenstoff-Kohlenstoff-Mehrfachbindungen aufweisen,
(B) Organopolysiloxane mit Si-gebundenen Wasserstoffatomen oder anstelle von (A) und (B)
(C) Organopolysiloxane, die SiC-gebundene Reste mit aliphatischen Kohlenstoff-Kohlenstoff-Mehrfachbindungen und Si-gebundene Wasserstoffatome aufweisen, und
(D) Rhodiumkatalysator der Formel

   [(R²-C(=O)-O-)₂Rh]₂ (III),

wobei
- R²: gleich oder verschieden sein kann und Wasserstoffatom, oder einwertige, gegebenenfalls substituierte Kohlenwasserstoffreste mit 1 bis 24 Kohlenstoffatomen bedeutet.

Falls es sich um substituierte Reste handelt, sind als Substituenten vorzugsweise Halogenatome, wie F, C1, Br und J, Cyanoreste, Heteroatome, wie O, S, N und P, sowie Gruppen -OR⁴ bevorzugt, wobei R⁴ die oben genannte Bedeutung hat.

Bei den erfindungsgemäßen Zusammensetzungen kann es sich um Einkomponenten-Organopolysiloxanmassen wie auch um Zweikomponenten-Organopolysiloxanmassen handeln. In letzterem Fall können die beiden Komponenten der erfindungsgemäßen Massen alle Bestandteile in beliebiger Kombination enthalten, im allgemeinen mit der Maßgabe, dass eine Komponente nicht gleichzeitig Siloxane mit aliphatischer Mehrfachbindung, Siloxane mit Si-gebundenem Wasserstoff und Katalysator, also im wesentlichen nicht gleichzeitig die Bestandteile (A), (B) und (D) bzw. (C) und (D), enthält. Besonders bevorzugt ist dabei, dass eine Komponente die Bestandteile (A), (B) oder nur (C) enthält, und die zweite Komponente (A) und (D) enthält.

Die in den erfindungsgemäßen Massen eingesetzten Verbindungen (A) und (B) bzw. (C) werden bekanntermaßen so gewählt, dass eine Vernetzung möglich ist. So weist beispielsweise Verbindung (A) mindestens zwei aliphatisch ungesättigte Reste auf und Siloxan (B) mindestens drei Si-gebundene Wasserstoffatome, oder Verbindung (A) weist mindestens drei aliphatisch ungesättigte Reste auf und Siloxan (B) mindestens zwei Si-gebundene Wasserstoffatome, oder aber anstelle von Verbindung (A) und (B) wird Siloxan (C) eingesetzt, welches aliphatisch ungesättigte Reste und Si-gebundene Wasserstoffatome in den obengenannten Verhältnissen aufweist.

Vorzugsweise enthalten die erfindungsgemäßen Siliconmassen als Bestandteil (A) eine aliphatisch ungesättigte Organosiliciumverbindung, wobei alle bisher in additionsvernetzenden Massen verwendeten, aliphatisch ungesättigten Organosiliciumverbindungen eingesetzt werden können, wie auch beispielsweise Silicon-Blockcopolymere mit Harnstoffsegmenten, Silicon-Blockcopolymere mit Amid-Segmenten und/oder Imid-Segmenten und/oder Ester-Amid-Segmenten und/oder Polystyrol-Segmenten und/oder Silarylen-Segmenten und/oder Carboran-Segmenten und Silicon-Pfropfcopolymere mit EtherGruppen.

Als Organosiliciumverbindung (A), die SiC-gebundene Reste mit aliphatischen Kohlenstoff-Kohlenstoff-Mehrfachbindungen aufweisen, werden vorzugsweise lineare oder verzweigte Organopolysiloxane aus Einheiten der Formel

RₐR¹_{b}SiO_{(4-a-b)/2} (I)

eingesetzt, wobei
**R** gleich oder verschieden sein kann und einen von aliphatischen Kohlenstoff-Kohlenstoff-Mehrfachbindungen freien, organischen Rest bedeutet,
**R**^{**1**} gleich oder verschieden sein kann und einen einwertigen, gegebenenfalls substituierten, SiC-gebundenen Kohlenwasserstoffrest mit aliphatischer Kohlenstoff-Kohlenstoff-Mehrfachbindung bedeutet,
**a** 0, 1, 2 oder 3 ist und
**b** 0, 1 oder 2 ist

mit der Maßgabe, dass die Summe a + b kleiner oder gleich 3 ist und im Durchschnitt mindestens 2 Reste R¹ je Molekül vorliegen.

Beispiele für Reste **R** sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest, Cycloalkylreste, wie Cyclopentyl-, Cyclohexyl-, Cycloheptyl-und Methylcyclohexylreste, Arylreste, wie der Phenyl-, Naphthyl-, Anthryl- und Phenanthrylrest, Alkarylreste, wie o-, m-, p-Tolylreste, Xylylreste und Ethylphenylreste, und Aralkylreste, wie der Benzylrest, der α- und der β-Phenylethylrest.

Beispiele für substituierte Reste R sind Halogenalkylreste, wie der 3,3,3-Trifluor-n-propylrest, der 2,2,2,2',2',2'-Hexafluorisopropylrest und der Heptafluorisopropylrest, Halogenarylreste, wie der o-, m- und p-Chlorphenylrest.

Bevorzugt handelt es sich bei Rest R um einen einwertigen, von aliphatischen Kohlenstoff-Kohlenstoff-Mehrfachbindungen freien, SiC-gebundenen, gegebenenfalls substituierten Kohlenwasserstoffrest mit 1 bis 18 Kohlenstoffatomen, besonders bevorzugt um einen einwertigen, von aliphatischen Kohlenstoff-Kohlenstoff-Mehrfachbindungen freien, SiC-gebundenen Kohlenwasserstoffrest mit 1 bis 6 Kohlenstoffatomen, insbesondere um den Methyl- oder Phenylrest.

Bei Rest R¹ kann es sich um beliebige, einer Anlagerungsreaktion (Hydrosilylierung) mit einer SiH-funktionellen Verbindung zugängliche Gruppen handeln.

Falls es sich bei Rest R¹ um SiC-gebundene, substituierte Kohlenwasserstoffreste handelt, sind als Substituenten Halogenatome, Cyanoreste und -OR⁴ bevorzugt, wobei R⁴ die obengenannte Bedeutung hat.

Bevorzugt handelt es sich bei Rest R¹ um Alkenyl- und Alkinylgruppen mit 2 bis 16 Kohlenstoffatomen, wie Vinyl-, Allyl-, Methallyl-, 1-Propenyl-, 5-Hexenyl-, Ethinyl-, Butadienyl-, Hexadienyl-, Cyclopentenyl-, Cyclopentadienyl-, Cyclohexenyl-, Vinylcyclohexylethyl-, Divinylcyclohexylethyl-, Norbornenyl-, Vinylphenyl- und Styrylreste, wobei Vinyl-, Alkinyl-, Allyl- und Hexenylreste besonders bevorzugt verwendet werden.

Das Molekulargewicht des Bestandteils (A) kann in weiten Grenzen variieren, etwa zwischen 10² und 10⁶ g/mol. So kann es sich bei dem Bestandteil (A) beispielsweise um ein relativ niedermolekulares alkenylfunktionelles Oligosiloxan, wie 1,2-Divinyltetramethyldisiloxan, handeln, jedoch auch um ein über kettenständige oder endständige Si-gebundene Vinylgruppen verfügendes hochpolymeres Polydimethylsiloxan, z.B. mit einem Molekulargewicht von 10⁵ g/mol (mittels NMR bestimmtes Zahlenmittel). Auch die Struktur der den Bestandteil (A) bildenden Moleküle ist nicht festgelegt; insbesondere kann die Struktur eines höhermolekularen, also oligomeren oder polymeren Siloxans linear, cyclisch, verzweigt oder auch harzartig, netzwerkartig sein. Lineare und cyclische Polysiloxane sind vorzugsweise aus Einheiten der Formel R₃SiO_{1/2}, R¹R₂SiO_{1/2}, R¹RSiO_{2/2} und R₂SiO_{2/2} zusammengesetzt, wobei R und R¹ die vorstehend angegebene Bedeutung haben. Verzweigte und netzwerkartige Polysiloxane enthalten zusätzlich trifunktionelle und/oder tetrafunktionelle Einheiten, wobei solche der Formeln RSiO_{3/2}, R¹SiO_{3/2} und SiO_{4/2} bevorzugt sind. Selbstverständlich können auch Mischungen unterschiedlicher, den Kriterien des Bestandteils (A) genügender Siloxane eingesetzt werden.

Besonders bevorzugt als Komponente (A) ist die Verwendung vinylfunktioneller, im wesentlichen linearer Polydiorganosiloxane mit einer Viskosität von 0,01 bis 500 000 Pa·s, besonders bevorzugt von 0,1 bis 100 000 Pa·s, jeweils bei 25°C.

Als Organosiliciumverbindung (B) können alle hydrogenfunktionellen Organosiliciumverbindungen mit einer Viskosität von 1 bis 100 000 mPa·s, bevorzugt 10 bis 10 000 mPa·s, besonders bevorzugt 50 bis 1000 mPa·s, jeweils bei 25°C, eingesetzt werden, die auch bisher in additionsvernetzbaren Massen eingesetzt worden sind.

Als Organopolysiloxane (B), die Si-gebundene Wasserstoffatome aufweisen, werden vorzugsweise lineare, cyclische oder verzweigte Organopolysiloxane aus Einheiten der Formel

R_{c}H_{d}SiO_{(4-c-d)/2} (II)

eingesetzt, wobei
**R** gleich oder verschieden sein kann und die oben angegebene Bedeutung hat,
**c** 0, 1, 2 oder 3 ist und
**d** 0, 1 oder 2 ist,

mit der Maßgabe, dass die Summe von c + d kleiner oder gleich 3 ist und im Mittel mindestens zwei Si-gebundene Wasserstoffatome je Molekül vorliegen.

Vorzugsweise enthält das erfindungsgemäß eingesetzte Organopolysiloxan (B) Si-gebundenen Wasserstoff im Bereich von 0,04 bis 1,7 Gewichtsprozent, bezogen auf das Gesamtgewicht des Organopolysiloxans (B).

Das Molekulargewicht des Bestandteils (B) kann ebenfalls in weiten Grenzen variieren, etwa zwischen 10² und 10⁶ g/mol. So kann es sich bei dem Bestandteil (B) beispielsweise um ein relativ niedermolekulares SiH-funktionelles Oligosiloxan, wie Tetramethyldisiloxan, handeln, jedoch auch um ein über kettenständige oder endständige SiH-Gruppen verfügendes hochpolymeres Polydimethylsiloxan oder ein SiH-Gruppen aufweisendes Siliconharz. Auch die Struktur der den Bestandteil (B) bildenden Moleküle ist nicht festgelegt; insbesondere kann die Struktur eines höhermolekularen, also oligomeren oder polymeren SiH-haltigen Siloxans linear, cyclisch, verzweigt oder auch harzartig, netzwerkartig sein. Lineare und cyclische Polysiloxane sind vorzugsweise aus Einheiten der Formel R₃SiO_{1/2}, HR₂SiO_{1/2}, HRSiO_{2/2} und R₂SiO_{2/2} zusammengesetzt, wobei R die vorstehend angegebene Bedeutung haben. Verzweigte und netzwerkartige Polysiloxane enthalten zusätzlich trifunktionelle und/oder tetrafunktionelle Einheiten, wobei solche der Formeln RSiO_{3/2}, HSiO_{3/2} und SiO_{4/2} bevorzugt sind. Selbstverständlich können auch Mischungen unterschiedlicher, den Kriterien des Bestandteils (B) genügender Siloxane eingesetzt werden. Insbesondere können die den Bestandteil (B) bildenden Moleküle zusätzlich zu den obligaten SiH-Gruppen gegebenenfalls zugleich auch aliphatisch ungesättigte Gruppen enthalten. Besonders bevorzugt ist die Verwendung niedermolekularer SiH-funktioneller Verbindungen, wie Tetrakis(dimethylsiloxy)silan und Tetramethylcyclotetrasiloxan, sowie höhermolekularer, SiH-haltiger Siloxane, wie Poly(hydrogenmethyl)siloxan und Poly(dimethylhydrogenmethyl)siloxan mit einer Viskosität bei 25°C von 10 bis 10 000 mPa·s, oder analoge SiH-haltige Verbindungen, bei denen ein Teil der Methylgruppen durch 3,3,3-Trifluorpropyl- oder Phenylgruppen ersetzt ist.

Bestandteil (B) ist vorzugsweise in einer solchen Menge in den erfindungsgemäßen vernetzbaren Silicongesamtmassen enthalten, dass das Molverhältnis von SiH-Gruppen zu aliphatisch ungesättigten Gruppen bei 0,1 bis 20, besonders bevorzugt zwischen 0,8 und 4,0, liegt.

Die erfindungsgemäß eingesetzten Komponenten (A) und (B) sind handelsübliche Produkte bzw. nach in der Chemie gängigen Verfahren herstellbar.

Anstelle von Komponente (A) und (B) können die erfindungsgemäßen Massen Organopolysiloxane (C), die aliphatische Kohlenstoff-Kohlenstoff-Mehrfachbindungen und Si-gebundene Wasserstoffatome aufweisen, enthalten, was jedoch nicht bevorzugt ist.

Falls Siloxane (C) eingesetzt werden, handelt es sich vorzugsweise um solche aus Einheiten der Formel

R_{g}SiO_{4-g/2}, RₕR¹SiO_{3-h/2} und RᵢHSiO_{3-i/2},

wobei R und R¹ die oben dafür angegebene Bedeutung haben,
g 0, 1, 2 oder 3 ist,
h 0, 1 oder 2 ist und
i 0, 1 oder 2 ist,
mit der Maßgabe, dass je Molekül mindestens 2 Reste R¹ und mindestens 2 Si-gebundene Wasserstoffatome vorliegen.

Beispiele für Organopolysiloxane (C) sind solche aus SiO_{4/2}-, R₃SiO_{1/2}-, R₂R¹SiO_{1/2}- und R₂HSiO_{1/2}-Einheiten, sogenannte MQ-Harze, wobei diese Harze zusätzlich RSiO_{3/2}- und R₂SiO-Einheiten enthalten können, sowie lineare Organopolysiloxane im wesentlichen bestehend aus R₂R¹-SiO_{1/2}-, R₂SiO- und RHSiO-Einheiten mit R und R¹ gleich der obengenannten Bedeutung.

Die Organopolysiloxane (C) besitzen vorzugsweise eine durchschnittliche Viskosität von 0,01 bis 500 000 Pa·s, besonders bevorzugt 0,1 bis 100 000 Pa·s, jeweils bei 25°C.

Organopolysiloxane (C) sind nach in der Chemie gängigen Methoden herstellbar.

Beispiele für R² sind Alkylreste, wie der Methyl-, Ethyl-, n-Propyl-, iso-Propyl-, 1-n-Butyl-, 2-n-Butyl-, iso-Butyl-, tert. Butyl-, n-Pentyl-, iso-Pentyl, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4- Trimethylpentylrest, Nonylreste, wie der n-Nonylrest, Decylreste, wie der n-Decylrest, Cycloalkylreste, wie Cyclopropyl-, Cyclopentyl-, Cyclohexyl-, Cycloheptylreste und Methylcyclohexylreste, ungesättigte Reste, wie der Allyl-, 5-Hexenyl-, 7-Octenyl-, Cyclohexenyl- und Styrylrest, Arylreste, wie Phenylreste, o-,m-,p-Tolylreste, Xylylreste und Ethylphenylreste und Aralkylreste, wie der Benzylrest und der α- und β-Phenylethylrest.
Besonders bevorzugt handelt es sich bei R² um Wasserstoff, Methyl- und Octylreste.

Beispiele für R³ sind Alkylreste, wie der Methyl-, Ethyl-, n-Propyl-, iso-Propyl-, 1-n-Butyl-, 2-n-Butyl-, iso-Butyl-, tert. Butyl-, n-Pentyl-, iso-Pentyl, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4- Trimethylpentylrest, Nonylreste, wie der n-Nonylrest, Decylreste, wie der n-Decylrest, Cycloalkylreste, wie Cyclopropyl-, Cyclopentyl-, Cyclohexyl-, Cycloheptylreste und Methylcyclohexylreste, ungesättigte Reste, wie der Allyl-, 5-Hexenyl-, 7-Octenyl-, Cyclohexenyl- und Styrylrest, Arylreste, wie Phenylreste, o-,m-,p-Tolylreste, Xylylreste und Ethylphenylreste, Aralkylreste, wie der Benzylrest und der α-und β-Phenylethylrest, sowie Reste der Formel -C(R¹)=CR¹₂; weitere Beispiele für R³ sind -OR⁴-Reste, wie Hydroxy-, Methoxy-, Ethoxy-, Isopropoxy-, Butoxy- und Phenoxyreste. Beispiele für halogenierte Reste R³ sind Halogenalkylreste, wie der 3,3,3-Trifluor-n-propylrest, der 2,2,2,2',2',2',-Hexafluorisopropylrest, der Heptafluorisopropylrest und Halogenarylreste, wie der o-,m-, und p-Chlorphenylrest.

Bevorzugt handelt es sich bei Rest R³ um Wasserstoffatom, Methyl-, Butyl-, Phenyl-, Hydroxy-, Methoxy-, Phenoxy-, Octyloxyreste und Kohlenwasserstoffreste mit 1 bis 8 Kohlenstoffatomen wobei Wasserstoffatom, Phenoxyrest, Methyl-, Butyl- und Phenylrest besonders bevorzugt sind.

Beispiele für Rest R⁴ sind die für Rest R³ angegebenen Reste.

Bevorzugt handelt es sich bei R⁴ um Wasserstoffatom, Alkylreste und Arylreste, wobei Wasserstoffatom, der Methyl-, der Phenyl und der Ethylrest besonders bevorzugt sind.

Die erfindungsgemäß eingesetzten Rhodiumverbindungen sind dem Fachmann bekannt und können zum Teil käuflich erworben werden oder können nach bekannten Herstellvorschriften hergestellt werden.

Bei dem erfindungsgemäß eingesetzten Rhodiumkatalysator (D) handelt es sich bevorzugt um Rhodium(II)acetat-Dimer und Rhodium(II)octanoate-Dimer.

Die Menge des erfindungsgemäß eingesetzten Rodiumkatalysators (D) richtet sich nach der gewünschten Vernetzungsgeschwindigkeit und der jeweiligen Verwendung sowie ökonomischen Gesichtspunkten. Die erfindungsgemäßen Massen enthalten Rhodiumkatalysatoren (D) in solchen Mengen, dass ein Rhodiumgehalt von vorzugsweise 0,05 bis 500 Gewichts-ppm (= Gewichtsteile je Million Gewichtsteile), besonders bevorzugt 0,5 bis 100 Gewichts-ppm, insbesondere 1 bis 50 Gewichts-ppm, jeweils bezogen auf das Gesamtgewicht der Masse, resultiert.

Außer den Komponenten (A) bis (D) können die erfindungsgemäßen härtbaren Zusammensetzungen noch alle weiteren Stoffe enthalten, die auch bisher zur Herstellung von additionsvernetzbaren Massen eingesetzt wurden.

Beispiele für verstärkende Füllstoffe, die als Komponente (E) in den erfindungsgemäßen Massen eingesetzt werden können, sind vorzugsweise pyrogene oder gefällte Kieselsäuren mit BET-Oberflächen von mindestens 50 m²/g sowie Ruße und Aktivkohlen wie Furnace-Ruß und Acetylen-Ruß, wobei pyrogene und gefällte Kieselsäuren mit BET-Oberflächen von mindestens 50 m²/g bevorzugt sind.

Die genannten Kieselsäurefüllstoffe können hydrophilen Charakter haben oder nach bekannten Verfahren hydrophobiert sein. Beim Einmischen hydrophiler Füllstoffe ist die Zugabe eines Hydrophobierungsmittels erforderlich.

Der Gehalt der erfindungsgemäßen vernetzbaren Masse an aktiv verstärkendem Füllstoff (E) liegt im Bereich von 0 bis 70 Gew.-%, vorzugsweise bei 0 bis 50 Gew.-%.

Die erfindungsgemäße Siliconkautschukmasse kann wahlweise als Bestandteil (F) weitere Zusätze zu einem Anteil von bis zu 70 Gew.-%, vorzugsweise 0,0001 bis 40 Gew.-%, enthalten. Diese Zusätze können z.B. inaktive Füllstoffe, harzartige Polyorganosiloxane, die von den Siloxanen (A), (B) und (C) verschieden sind, Dispergierhilfsmittel, Lösungsmittel, Haftvermittler, Färbemittel wie anorganische Pigmente (z.B. Kobaltblau) und organische Farbstoffe, Weichmacher, organische Polymere, usw. sein. Hierzu zählen Zusätze, wie Quarzmehl, Diatomeenerde, Tone, Kreide, Lithopone, Ruße, Graphit, Metalloxide, Metallcarbonate, -sulfate, Metallsalze von Carbonsäuren, Metallstäube, Fasern, wie Glasfasern, Kunststoffasern, Kunststoffpulver, Metallstäube, Farbstoffe, Pigmente usw. Des weiteren können Mittel zur Verbesserung der Hitzebeständigkeit und des Flammhemmvermögens, sogenannte Hitzestabilisatoren, zugesetzt werden. Es können dabei alle bisher in Siliconkautschuken verwendete Hitzestabilisatoren eingesetzt werden. Bevorzugt handelt es dabei aber um Übergangsmetallverbindungen und Ruß. Beispiele sind Ceroxid, Ceroctoat, Cer-Siloxan-Verbindungen Eisenoxid, Eisenoctoat, Eisen-Siloxan-Verbindungen Zinkcarbonat, Mangancarbonat und Titanoxid.

Enthalten sein können des weiteren Zusätze (G), die der gezielten Einstellung der Verarbeitungszeit, Anspringtemperatur und Vernetzungsgeschwindigkeit der erfindungsgemäßen Massen dienen. Diese Inhibitoren und Stabilisatoren sind auf dem Gebiet der additionsvernetzenden Massen sehr gut bekannt. Beispiele gebräuchlicher Inhibitoren sind acetylenische Alkohole, wie 1-Ethinyl-1-cyclohexanol, 2-Methyl-3-butin-2-ol, 3,5-Dimethyl-1-hexin-3-ol und 3-Methyl-1-dodecin-3-ol, Polymethylvinylcyclosiloxane, wie 1,3,5,7-Tetravinyltetramethyltetracyclosiloxan, niedermolekulare Siliconöle mit MethylvinylSiO_{2/2}-Gruppen und/oder R₂vinylSiO_{1/2-}Endgruppen, wie Divinyltetramethyldisiloxan, Tetravinyldimethyldisiloxan, Trialkylcyanurate, Alkylmaleate, wie Diallylmaleate, Dimethylmaleat und Diethylmaleat, Alkylfumarate, wie Diallylfumarat und Diethylfumarat, organische Hydroperoxide, wie Cumolhydroperoxid, tert.-Butylhydroperoxid und Pinanhydroperoxid, organische Peroxide, organische Sulfoxide, organische Amine, Diamine und Amide, Phosphane und Phosphite, Nitrile, Triazole, Diaziridine und Oxime. Die Wirkung dieser Inhibitorzusätze (G) hängt von ihrer chemischen Struktur ab, so dass sie individuell bestimmt werden muß.

Der Inhibitorgehalt der erfindungsgemäßen Massen beträgt vorzugsweise 0 bis 50 000 ppm, besonders bevorzugt 0 bis 1000 ppm, insbesondere 0 bis 100 ppm.

Die erfindungsgemäßen Organopolysiloxanmassen können, falls erforderlich, in Flüssigkeiten gelöst, dispergiert, suspendiert oder emulgiert werden. Die erfindungsgemäßen Massen können - insbesondere je nach Viskosität der Bestandteile sowie Füllstoffgehalt - niedrigviskos und gießbar sein, eine pastöse Konsistenz aufweisen, pulverförmig sein oder auch geschmeidige, hochviskose Massen darstellen, wie dies bekanntermaßen bei den in Fachkreisen häufig als RTV-1, RTV-2, LSR und HTV bezeichneten Massen der Fall sein kann. Hinsichtlich der elastomeren Eigenschaften der vernetzten erfindungsgemäßen Siliconmassen wird gleichfalls das gesamte Spektrum umfasst, beginnend bei extrem weichen Silicongelen, über gummiartige Materialien bis hin zu hochvernetzten Siliconen mit glasartigem Verhalten..

Ein weiterer Gegenstand ist ein Verfahren zur Herstellung der erfindungsgemäßen Organopolysiloxanmassen durch Vermischung des Rhodiumkatalysators (D) mit einer Mischung aus (A), gegebenenfalls (E) und (F), und (B).

Die Herstellung der erfindungsgemäßen Organopolysiloxanmassen kann nach bekannten Verfahren erfolgen, wie beispielsweise durch gleichmäßige Vermischung der einzelnen Komponenten. Die Reihenfolge dabei ist beliebig, vorzuziehen ist jedoch die gleichmäßige Vermischung des Rhodiumkatalysators (D) mit einer Mischung aus (A), gegebenenfalls (E) und (F), und (B) als letzte Komponente. Die Mischung kann auch analog zu den bekannten Platin-vernetzenden Mischungen als Zwei-Komponenten-System aufgebaut werden. Dabei enthält die erste Komponente in der Regel (A), (D) und gegebenenfalls (E) und (F) zusammengesetzt und die zweite Komponente enthält (B) und gegebenenfalls (A), (E) und (F). Das Zwei-Komponenten-System kann aber auch so aufgebaut werden, dass die erste Komponente (A), (B) und gegebenenfalls (E) und (F) enthält und die zweite Komponente aus (D) und gegebenenfalls (A), (E) und (F) besteht. Im Falle der Zwei-Komonenten-Systeme müssen die beiden Komponenten vor der Vernetzung vermischt werden, was je nach Viskosität entweder mit einem Rührer, Dissolver, Walze oder Kneter erfolgen kann. Die zwei Komponenten können so aufbaut sein, dass die Komponenten vorzugsweise im Verhältnis 1:1 gemischt werden müssen, sie können aber auch so aufgebaut werden, dass auf 200 Gewichts-Teile der einen Komponente 1 Gewichtsteil der anderen Komponente kommt. Auch alle dazwischen liegende Mischungsverhältnisse sind möglich. Der erfindungsgemäß eingesetzte Rhodiumkatalysator (D) kann als Festsubstanz oder als Lösung - in einem geeigneten Lösungsmittel gelöst - oder als sog. Batch - gleichmäßig mit einer geringen Menge (A) oder (A) mit (E) vermischt - eingearbeitet werden. Die Vermischung erfolgt dabei abhängig von der Viskosität von (A) z.B. mit einem Rührer, in einem Dissolver, auf einer Walze oder in einem Kneter. Der Katalysator (D) kann auch in einem organischen Thermoplasten bzw. thermoplastischen Siliconharz verkapselt werden.

Bei den erfindungsgemäß eingesetzten Komponenten (A) bis (G) kann es sich jeweils um eine einzelne Art einer solchen Komponente, wie auch um ein Gemisch aus mindestens zwei verschiedenen Arten einer solchen Komponente handeln.

Die erfindungsgemäßen durch Anlagern von Si-gebundenem Wasserstoff an aliphatische Mehrfachbindung vernetzbaren Massen können unter den gleichen Bedingungen vernetzt werden, wie die bisher bekannten durch Hydrosilylierungsreaktionen mit Platin vernetzbaren Massen. Vorzugsweise handelt es sich dabei um Temperaturen von 50 bis 220°C, besonders bevorzugt von 120 bis 190°C, und einem Druck von 900 bis 1100 hPa. Es können aber auch höhere oder niedrigere Temperaturen und Drücke angewendet werden. Die Vernetzung kann auch photochemisch mit energiereicher Strahlung, wie z.B. sichtbares Licht mit kurzen Wellenlängen und UV-Licht, oder mit einer Kombination aus thermischer und photochemischer Anregung durchgeführt werden.

Ein weiterer Gegenstand der vorliegenden Erfindung sind Extrudate und Formkörper hergestellt durch Vernetzung der erfindungsgemäßen Massen.

Die erfindungsgemäßen Massen sowie die erfindungsgemäß daraus hergestellten Vernetzungsprodukte können für alle Zwecke eingesetzt werden, für die auch bisher zu Elastomeren vernetzbare Organopolysiloxanmassen bzw. Elastomere verwendet wurden. Dies umfasst beispielsweise die Siliconbeschichtung bzw. Imprägnierung beliebiger Substrate, die Herstellung von Formteilen, z.B. im Spritzgussverfahren, Vakuumextrusionsverfahren, Extrusionsverfahren, Formgießen und Formpressen, Abformungen, die Verwendung als Dicht- Einbett-und Vergussmassen usw. Besonders bevorzugt sind. Formteile und Extrudate, die eine besonders hohe Transparenz aufweisen müssen, wie Taucherbrillen, Schnuller,' Brillenbads jegliche Verklebungen und Beschichtungen von transparenten Substraten, wie Glas und Polycabonat, Lebensmittel-Gußformen, wie Backformen oderFormen für die Herstellung von Confiserieprodukten wie Pralinen; Schläuche, Profile, Dichtungen und Dämpfungselement, usw.

Die erfindungsgemäßen vernetzbaren Massen haben den Vorteil, dass sie in einem einfachen Verfahren unter Verwendung leicht zugänglicher Ausgangsstoffe und damit wirtschaftlich hergestellt werden können.

Die erfindungsgemäßen vernetzbaren Massen haben den Vorteil, dass sie als inhibitorfreie Formulierung bei 25°C und Umgebungsdruck eine gute Lagerstabilität aufweisen und erst bei erhöhter Temperatur rasch vernetzen.

Die erfindungsgemäßen Siliconmassen haben den Vorteil, dass diese bei zweikomponentiger Formulierung nach Vermischen der beiden Komponenten eine vernetzungsfähige Siliconmasse ergeben, deren Verarbeitbarkeit über einen langen Zeitraum hinweg bei 25°C und Umgebungsdruck bestehen bleibt (extrem lange Topfzeit) und erst bei erhöhter Temperatur rasch vernetzt.

Die erfindungsgemäßen Massen haben des weiteren den Vorteil, dass die vernetzten Siliconkautschuke eine ausgezeichnete Durchsichtigkeit und Transparenz aufweisen.

Die erfindungsgemäßen Massen haben des weiteren den Vorteil, dass die vernetzten Siliconkautschuke keine Gelb- oder Braunfärbung aufweisen.

Die erfindungsgemäßen Massen haben ferner den Vorteil, dass die Hydroslilylierungsreaktion sich nicht mit der Reaktionsdauer verlangsamt.

Die erfindungsgemäßen Massen haben ferner den Vorteil, dass die Hydroslilylierungsreaktion sich auch nach langer Lagerung bei Raumtemperatur nicht verändert (insbesondere nicht verlangsamt).

In den nachstehend beschriebenen Beispielen beziehen sich alle Angaben von Teilen und Prozentsätzen, falls nicht anders angegeben, auf das Gewicht. Sofern nicht anders angegeben, werden die nachstehenden Beispiele bei einem Druck der umgebenden Atmosphäre, also etwa bei 1000 hPa, und bei Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt.

Im folgenden beziehen sich alle Viskositätsangaben auf eine Temperatur von 25°C.

### Beispiel 4

589,4 Teile eines Vinyldimethylsiloxy-terminierten Polydimethylsiloxans mit einer Brabender-Plastizität von 630 mkp entsprechend einer mittleren Molmasse von ca. 500000 g/mol wurden mit 252,6 Masseteilen einer hydrophoben pyrogenen Kieselsäure mit einer Oberfläche nach BET von 300 m²/g und einem Kohlenstoffgehalt von 3,95 Gew.-%, die in Portionen zudosiert wurde, 4 Stunden in einem Kneter zu einer homogenen Masse vermischt.

500 Teile der so erhaltenen Grundmasse 2 wurden auf einer Walze bei einer Temperatur von 20°C mit 0,1 Teile Inhibitor, 7,5 Teilen SiH-Vernetzer und 2 Teilen Katalysatorbatch zu einer homogenen Masse vermischt, wobei als Inhibitor 1-Ethinyl-1-cyclohexanol eingesetzt wurde, und der SiH-Vernetzer ein Mischpolymerisat aus Dimethylsiloxy- und Methylhydrogensiloxy-und Trimethylsiloxy-Einheiten mit einer Viskosität von 310 mPa·s bei 25°C und einem Gehalt an Si-gebundenem Wasserstoff von 0,46 Gew.-% war. Der Katalysatorbatch wird hergestellt indem 200 Teile der oben beschriebenen Grundmasse 2 mit 1,8 Teilen Rhodium(II)octanoat-Dimer (in Dichlormethan gelöst) im Kneter 30 Minuten homogenisiert wurden.

### Vergleichsbeispiel 3

Die in Beispiel 4 beschriebene Arbeitsweise wird wiederholt mit den Abänderungen, dass als Katalysator 10 ppm Platin als Platin-Divinyltetramethyldisiloxan-Komplex in Vinylterminiertem Polydimethylsiloxan (käuflich erhältlich bei ABCR GmbH & Co, Deutschland) und 0,5 Teilen Inhibitor (=1-Ethinyl-1-cyclohexanol) verwendet wurden.

Die thermischen Härtungseigenschaften in dem Beispiel 4 sowie Vergleichsbeispiel 3 (V3) hergestellten Siliconmassen wurden mit einem Goettfert-Elastograph gemessen und zwar 7 Std. nachdem die A- und B-Komponenten im Verhältnis 1:1 gemischt wurden. Beispiel 4 und Vergelichsbeispiel 3 wurden sofort nach dem Vermischen gemessen.
Zur quantitativen Ermittlung der Lagerbarkeit wurden die hergestellten Formulierungen bei Raumtemperatur (RT) gelagert, wobei die Zeitdauer (gemessen in Tagen) bis zur Verdoppelung des Anfangswertes der Viskosität ermittelt wurde. Die Messergebnisse werden in Tabelle 1 dargestellt.

**Tabelle 1:**

| Beispiele | 4 | V3 |
|---|---|---|
| a_{T} [°C] | 135 | 122 |
| Lagerung bei RT | > 10 d | < 4d |

| | | |
|---|---|---|
| -*: die Mischung war vor der Messung bereits vernetzt. | | |
| d: Tage | | |
| s: Sekunden | | |

Die Anspringtemperatur a_{T} wurde mit einer Heizrate von 10°C/min bestimmt. Die Temperatur, die dem 4%-Wert des maximalen Drehmomentes entspricht, wurde als Anspringtemperatur definiert.
Die Bestimmung des t₅₀-Wertes erfolgte nach DIN 53529 T3. Die Dauer vom Beginn der Härtung bis 50% (t₅₀-Wert) des maximalen Drehmoments wurde dabei bei 150°C ermittelt.

Zum weiteren Vergleich wurden von den Siliconmassen vernetzte Siliconkautschuk-Folien hergestellt und die mechanischen Eigenschaften bestimmt. Die Herstellung der vernetzten Siliconkautschuke erfolgte dadurch, dass die Mischung des jeweiligen Beispiels in einer hydraulischen Presse bei einer Temperatur von 170°C während 10 Minuten zum Siliconkautschuk vernetzt wurde. Die entformten ca. 2 mm bzw. 6 mm dicken Siliconkautschukfolien wurden mechanischen Prüfungen unterworfen.
Das Ergebnis kann Tabelle 2 entnommen werden.

**Tabelle 2:**

| | Härte [Shore A] | RF [N/mm²] | RD [%] | Aussehen |
|---|---|---|---|---|
| Beispiel 4 | 37 | 12,3 | 1180 | farblos, transparent |
| Vergleich V3 | 39 | 13,0 | 1100 | Gelbstich |

| | | | | |
|---|---|---|---|---|
| -* bereits vorher vernetzt. | | | | |
| Härte: Shore-A-Härte wurde bestimmt gemäß DIN 53505, | | | | |
| RF: Reißfestigkeit wurde bestimmt gemäß DIN 53504-S1 | | | | |
| RD: Reißdehnung wurde bestimmt gemäß DIN 53504-S1 | | | | |
| WRW: Weiterreißwiderstand wurde bestimmt gemäß ASTM D 624 | | | | |
| RP: Rückprallelastizität wurde bestimmt gemäß DIN 53512 | | | | |

## Patentansprüche

1. Organopolysiloxanmassen, die durch zumindest eine Rhodiumverbindung härten, enthaltend:
(A) Verbindungen, die Reste mit aliphatischen Kohlenstoff-Kohlenstoff-Mehrfachbindungen aufweisen,
(B) Organopolysiloxane mit Si-gebundenen Wasserstoffatomen oder anstelle von (A) und (B)
(C) Organopolysiloxane, die SiC-gebundene Reste mit aliphatischen Kohlenstoff-Kohlenstoff-Mehrfachbindungen und Si-gebundene Wasserstoffatome aufweisen, und
(D) Rhodiumkatalysator, der Formel
[(R²-C(=O)-O-)₂Rh]₂ , (III)
wobei
R² gleich oder verschieden sein kann und Wasserstoffatom, oder einwertige, gegebenenfalls substituierte Kohlenwasserstoffreste mit 1 bis 24 Kohlenstoffatomen bedeutet.

2. Organopolysiloxanmassen nach Anspruch 1, **dadurch gekennzeichnet, dass** zumindest eine Rhodiumverbindung aus der Gruppe ausgewählt wird, die aus Rhodium(II)acetat-Dimer und Rhodium(II)octanoate-Dimer besteht.

3. Organopolysiloxanmassen nach Anspruch 1 oder 2, **dadurch gekennzeichnet, dass** ein Hitzstabilisator als Bestandteil F enthalten ist.

4. Organopolysiloxanmassen nach Anspruch 3, **dadurch gekennzeichnet, dass** als Hitzstabilisator zumindest einer aus der Gruppe ausgewählt wird, die aus Ceroxid, Ceroctoat, Cer-Siloxan-Verbindungen Eisenoxid, Eisenoctoat, Eisen-Siloxan-Verbindungen Zinkcarbonat, Mangancarbonat und Titanoxid besteht.

5. Verfahren zur Herstellung von Organopolysiloxanmassen nach einem oder mehreren der Ansprüche 1 bis 4 durch Vermischung des Rhodiumkatalysators (D) mit einer Mischung aus (A), gegebenenfalls Füllstoff (E) und (F), und (B).

6. Verfahren nach Anspruch 5 zur Herstellung von Organopolysiloxanmassen durch Vermischung des Rhodiumkatalysators (D) mit einer Mischung, wobei die Mischung als Zwei-Komponenten-System aufgebaut wird, dabei enthält die erste Komponente (A), (D) und gegebenenfalls (E) und (F) zusammengesetzt und die zweite Komponente enthält (B) und gegebenenfalls auch (A), (E) und (F),

7. Verfahren nach Anspruch 6 zur Herstellung von Organopolysiloxanmassen durch Vermischung des Rhodiumkatalysators (D) mit einer Mischung, wobei die Mischung als Zwei-Komponenten-System aufgebaut wird, dabei enthält die erste Komponente (A), (B) und gegebenenfalls (E) und (F) und die zweite Komponente enthält (D) und gegebenenfalls (A), (E) und (F).

8. Formkörper oder Extrudate, die aus Organopolysiloxanmassen nach einem oder mehreren der Ansprüche 1 bis 4 hergestellt sind.

9. Formkörper nach Anspruch 6, **dadurch gekennzeichnet, dass** es sich um eine Lebensmittel-Gussform handelt.

## Claims

1. Organopolysiloxane compositions which are cured by at least one rhodium compound and comprise:
(A) compounds which have radicals containing aliphatic carbon-carbon multiple bonds,
(B) organopolysiloxanes containing Si-bonded hydrogen atoms or, instead of (A) and (B)
(C) organopolysiloxanes which have SiC-bonded radicals containing aliphatic carbon-carbon multiple bonds and Si-bonded hydrogen atoms, and
(D) a rhodium catalyst of the formula
**[(R**^{**2**}**-C(=O)-O-)**_{**2**}**Rh]**_{**2**} (III),
where
**R**^{**2**} can be identical or different and is a hydrogen atom, or monovalent unsubstituted or substituted hydrocarbon radicals having from 1 to 24 carbon atoms.

2. Organopolysiloxane compositions according to Claim 1, **characterized in that** at least one rhodium compound is selected from the group consisting of rhodium(II) acetate dimer and rhodium(II) octanoate dimer.

3. Organopolysiloxane compositions according to Claim 1 or 2, **characterized in that** a heat stabilizer is present as constituent F.

4. Organopolysiloxane compositions according to Claim 3, **characterized in that** at least one of the group consisting of cerium oxide, cerium octoate, cerium-siloxane compounds, iron oxide, iron octoate, iron-siloxane is selected as heat stabilizer,

5. Process for preparing organopolysiloxane compositions according to one or more of Claims 1 to 4 by mixing the rhodium catalyst (D) with a mixture composed of (A), if appropriate filler (E) and (F), and (B).

6. Process according to Claim 5 for preparing organopolysiloxane compositions by mixing the rhodium catalyst (D) with a mixture, **characterized in that** the mixture being made up as two-component system; in this case the first component comprises (A), (D) and if appropriate (E) and (F) and the second component comprises (B) and if appropriate also (A), (E) and (F).

7. Process according to Claim 6 for preparing organopolysiloxane compositions by mixing the rhodium catalyst (D) with a mixture, the mixture being made up as two-component system; in this case the first component comprises (A), (B) and if appropriate (E) and (F) and the second component comprises (D) and if appropriate (A), (E) and (F).

8. Mouldings or extrudates which are produced from organopolysiloxane compositions according to one or more of Claims 1 to 4.

9. Moulding according to Claim 6, **characterized in that** it is a food mould.

## Revendications

1. Masses d'organopolysiloxane qui durcissent par au moins un composé du rhodium, contenant :
(A) des composés qui présentent des radicaux avec des liaisons carbone-carbone aliphatiques multiples,
(B) des organopolysiloxanes présentant des atomes d'hydrogène liés par Si ou, au lieu de (A) et (B),
(C) des organopolysiloxanes qui présentent des radicaux liés par SiC avec des liaisons carbone-carbone aliphatiques multiples et des atomes d'hydrogène liés par Si et
(D) un catalyseur du rhodium de formule
[(R²-C(=O)-O-)₂Rh]₂ (III),
où
R² peut être identique ou différent et signifie un atome d'hydrogène ou des radicaux hydrocarbonés monovalents, le cas échéant substitués comprenant 1 à 24 atomes de carbone.

2. Masses d'organopolysiloxane selon la revendication 1, **caractérisées en ce qu'**au moins un composé du rhodium est choisi dans le groupe constitué par le dimère d'acétate de rhodium (II) et le dimère d'octanoate de rhodium (II).

3. Masses d'organopolysiloxane selon la revendication 1 ou 2, **caractérisées en ce qu'**un stabilisateur à la chaleur est contenu comme constituant F.

4. Masses d'organopolysiloxane selon la revendication 3, **caractérisées en ce qu'**on choisit comme stabilisateur à la chaleur au moins un stabilisateur du groupe constitué par l'oxyde de cérium, l'octoate de cérium, les composés de cérium-siloxane, l'oxyde de fer, l'octoate de fer, les composés de fer-siloxane, le carbonate de zinc, le carbonate de manganèse et l'oxyde de titane.

5. Procédé pour la préparation des masses d'organopolysiloxane selon l'une ou plusieurs des revendications 1 à 4 par mélange du catalyseur de rhodium (D) avec un mélange de (A), le cas échéant d'une charge (E) et de (F), et de (B).

6. Procédé selon la revendication 5 pour la préparation de masses d'organopolysiloxane par mélange du catalyseur de rhodium (D) avec un mélange, le mélange étant élaboré comme un système à deux composants, le premier composant contenant (A), (D) et le cas échéant (E) et (F) ensemble et le deuxième composant contenant (B) et le cas échéant également (A), (E) et (F).

7. Procédé selon la revendication 6 pour la préparation des masses d'organopolysiloxane par mélange du catalyseur de rhodium (D) avec un mélange, le mélange étant élaboré comme un système à deux composants, le première composant contenant (A), (B) et le cas échéant (E) et (F) le deuxième composant contenant (D) et le cas échéant (A), (E) et (F).

8. Corps façonnés ou produits extrudés qui sont réalisés à partir de masses d'organopolysiloxane selon l'une ou plusieurs des revendications 1 à 4.

9. Corps façonnés selon la revendication 6, **caractérisés en ce qu'**il s'agit d'un moule pour produits alimentaire.
